# EUROPÄISCHE PATENTSCHRIFT

(11) **EP 0 518 080 B1**
(45) Veröffentlichungstag und Bekanntmachung des Hinweises auf die Patenterteilung: **22.02.1995**
(21) Anmeldenummer: 92108318.4
(22) Anmeldetag: 16.05.1992
(51) Int. Cl.: F16F 1/36

(54) **Schwingungsdämpfer**
Vibration damper
Amortisseur de vibrations

(30) Priorität: 14.06.1991 DE 4119605
(43) Veröffentlichungstag der Anmeldung: 16.12.1992
(73) Patentinhaber: Stop-Choc Schwingungstechnik GmbH & Co KG, D-71272 Renningen (DE)
(72) Erfinder: Schaefer, Lothar, W-7321 Birenbach (DE)
(74) Vertreter: Ostertag, Reinhard

(56) Entgegenhaltungen:
- EP-A- 0 316 283
- DE-C- 3 525 815
- FR-A- 2 456 260

## Beschreibung

Die Erfindung betrifft einen Schwingungsdämpfer gemäß dem Oberbegriff des Anspruches 1.

Bei derartigen bekannten Schwingungsdämpfern besteht der Federkörper in der Regel aus einem Gummimaterial, und das Befestigungsteil ist ein Metallteil, welches direkt in die Gummimasse des Federkörpers einvulkanisiert ist. Das Befestigungsteil hat eine Gewindebohrung zur Aufnahme einer Befestigungsschraube so ein Dämpfer ist in FR-A-2 456 260 bekanntgegeben.

Für manche Anwendungsfälle wäre es nun wünschenswert, einen Schwingungsdämpfer zu haben, der auch an solchen Lasten angebracht werden kann, bei denen keine Zugangsmöglichkeit zu einer Befestigungsschraube geschaffen werden kann.

Zur Lösung dieser Aufgabe wird durch die Erfindung ein Schwingungsdämpfer mit den im Anspruch 1 angegebenen Merkmalen geschaffen.

Bei einem solchen Schwingungsdämpfer kann das Ansetzen eines Werkzeuges zum Anziehen der Befestigungsschraube vom unteren Ende des Schwingungsdämpfers her erfolgen.

Vorteilhafte Weiterbildungen der Erfindung sind in Unteransprüchen angegeben.

Bei einem Schwingungsdämpfer gemäß Anspruch 2 ist die Befestigungsschraube in Abwärtsrichtung durch das Befestigungsteil unverlierbar gehalten.

Mit der Weiterbildung der Erfindung gemäß Anspruch 3 wird erreicht, daß der Schwingungsdämpfer zugleich zum Ausgleich von kleinen Lageunterschieden verwendet werden kann, darüber hinaus aber auch die Befestigungsschraube zugleich in Aufwärtsrichtung unverlierbar im Befestigungsteil gelagert ist. Die Befestigungsschraube kann bei abgenommener Stützhülse auch einfach in das Befestigungsteil eingesetzt werden.

Bei einem Schwingungsdämpfer gemäß Anspruch 4 ist die Befestigungseinheit ohne radiales Spiel, so daß auch transversale Kräfte direkt auf den Federkörper übertragen werden.

Nachstehend wird die Erfindung anhand eines Ausführungsbeispieles unter Bezugnahme auf die Zeichnung näher erläutert. In dieser zeigt die einzige Figur einen vertikalen axialen Schnitt durch einen Schwingungsdämpfer mit von unten betätigbarer Befestigungsschraube.

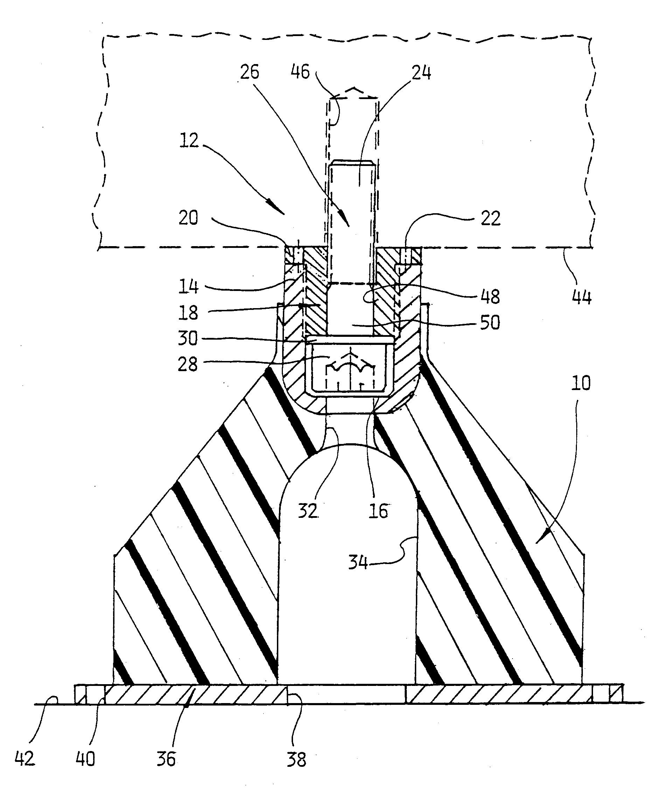

Der in Figur 1 gezeigte Schwingungsdämpfer hat einen aus gummielastischem Material gespritzten insgesamt mit 10 bezeichneten Federkörper, der im oberen Abschnitt kegelstumpfförmig, im unteren Abschnitt zylindrisch ist. In die Spitze des oberen Abschnittes ist eine insgesamt mit 12 bezeichnete Befestigungseinheit einvulkanisiert.

Die Befestigungseinheit 12 umfaßt ein becherförmiges, nach oben offenes Befestigungsteil 14, welches in seiner Umfangswand mit einem Innengewinde versehen ist und in seiner Bodenwand eine Durchgangsöffnung 16 aufweist.

In das Befestigungsteil 14 ist eine mit Außengewinde versehene Stützhülse 18 eingeschraubt, welche einen die obere Stirnfläche des Befestigungsteiles 14 übergreifenden Flansch 20 aufweist. Letzterer begrenzt die Einschraubbewegung der Stützhülse 18 und enthält zugleich mehrere in Umfangsrichtung verteilte Öffnungen 22 zum Ansetzen eines entsprechende Zapfen aufweisenden Stellschlüssels.

Durch die Stützhülse 18 ist ein Gewindeabschnitt 24 einer insgesamt mit 26 bezeichneten Befestigungsschraube hindurchgeführt. Deren Kopf 28 greift über einen Federring 30 an der unteren Stirnfläche der Stützhülse 18 an.

Der Federkörper 10 weist in Verlängerung der Durchgangsöffnung 16 eine Durchgangsöffnung 32 auf, die in eine größere zylindrisches Kammer 34 übergeht.

Auf die untere Stirnfläche des Federkörpers 10 ist eine Basisplatte 36 aufvulkanisiert, die ebenfalls mit einer mittigen Durchgangsöffnung 38 versehen ist. Im Randabschnitt der Basisplatte 36 sind Öffnungen 40 vorgesehen, durch welche Befestigungsschrauben zum festen Anbringen des gesamten Schwingungsdämpfers auf einer Aufstellfläche 42 hindurchgeführt werden können.

Bei 44 ist schematisch eine Last angedeutet, welche über den Schwingungsdämpfer erschütterungsfrel auf der Aufstellfläche 42 aufgestellt werden soll. Die Last 44 hat an den Stützstellen jeweils eine Gewindebohrung 46, in welche die Befestigungsschraube 26 eingedreht werden kann.

Da das Drehen der Befestigungsschraube 26 durch einen von unten durch den Schwingungsdämpfer eingesteckten Sechskantschlüssel erfolgen kann, kann man den Schwingungsdämpfer auch an solchen Lasten anbringen, bei denen die Stützstellen von oben schlecht zugänglich sind.

Durch Verdrehen der Stützhülse 18 lassen sich kleine Unregelmäßigkeiten in der Nivellierung der Aufstellfläche 42 ausgleichen, so daß man an allen Stützstellen der Last gleiche Federungsbedingungen erhält.

In der mit 48 bezeichneten Durchgangsbohrung der Stützhülse 18 läuft ein Lagerabschnitt 50 der Befestigungsschraube 26 in Gleitpassung, so daß auch transversal zur Dämpferachse gerichtete Kräfte spielfrei in den Federkörper 10 eingeleitet werden.

## Patentansprüche

1. Schwingungsdämpfer mit einem verformbaren Federkörper (10), der mit seinem unteren Ende auf eine Aufstellfläche (42) aufsetzbar ist und mit seinem oberen Ende eine Befestigungseinheit (12) trägt, die über eine Gewindeverbindung mit einer Last (44) verbindbar ist, dadurch gekennzeichnet, daß die Befestigungseinheit (12) ein mit dem Federkörper (10) verbundenes Befestigungsteil (14) und eine Befestigungsschraube (26) aufweist, wobei letztere über ein Axiallager (18, 28) mit nach oben weisendem Gewindeabschnitt (24) drehbar am Befestigungsteil (14) gelagert ist, und daß sowohl das Befestigungsteil (14) als auch der Federkörper (10) mit Durchgangsöffnungen (16, 32, 34) versehen sind, so daß ein Kopf (28) der Befestigungsschraube (26) vom unteren Ende des Schwingungsdämpfers her zugänglich ist.

2. Schwingungsdämpfer nach Anspruch 1, dadurch gekennzeichnet, daß der Durchmesser der im Befestigungsteil (14) vorgesehenen Durchgangsöffnung (16) kleiner ist als der Durchmesser des Kopfes (28) der Befestigungsschraube (26).

3. Schwingungsdämpfer nach Anspruch 1 oder 2, dadurch gekennzeichnet, daß das Axiallager eine im Befestigungsteil (14) durch ein Gewinde verstellbare Stützhülse (18) aufweist, die mit dem Kopf (28) der Befestigungsschraube (26) zusammenarbeitet.

4. Schwingungsdämpfer nach Anspruch 3, dadurch gekennzeichnet, daß eine Innenbohrung (48) der Stützhülse (18) im Gleitspiel mit einem Lagerabschnitt (50) der Befestigungsschraube (26) zusammenarbeitet.

5. Schwingungsdämpfer nach Anspruch 3 oder 4, dadurch gekennzeichnet, daß zwischen der unteren Stirnfläche der Stützhülse (18) und dem Kopf (28) der Befestigungsschraube (26) ein Federring (30) angeordnet ist.

6. Schwingungsdämpfer nach einem der Ansprüche 3 bis 5, dadurch gekennzeichnet, daß die Stützhülse (18) einen das Befestigungsteil (14) übergreifenden Flansch (20) aufweist.

7. Schwingungsdämpfer nach Anspruch 6, dadurch gekennzeichnet, daß der Flansch (20) auf seiner Stirnfläche mit Formschlußmitteln (22) zum Ansetzen eines Werkzeuges versehen ist.

8. Schwingungsdämpfer nach einem der Ansprüche 1 bis 7, dadurch gekennzeichnet, daß eine untere Basisplatte (36) mit einer Durchgangsöffnung (38) versehen ist, so daß ein Kopf (28) der Befestigungsschraube (26) vom unteren Ende des Schwingungsdämpfers her zugänglich ist.

9. Verfahren zum Herstellen eines Schwingungsdämpfers nach einem der Ansprüche 4 bis 8, bei welchem das Befestigungsteil (14) in eine den Federkörper (10) bildende Gummimasse eingebettet wird und an letztere anvulkanisiert wird, dadurch gekennzeichnet, daß das becherförmige, nach oben offene Befestigungsteil (14) beim Formen des Federkörpers (10) und beim Vulkanisieren desselben durch einen die Stützhülse (18) ersetzenden Stopfen verschlossen wird.

## Claims

1. Vibration absorber comprising a deformable spring body (10) which can be placed by its lower end on a setting-up surface (42) and carries with its upper end a fastening unit (12) which can be connected to a load (44) by way of a threaded connection, characterized in that the fastening unit (12) has a fastening part (14), which is connected to the spring body (10), and a fastening screw (26), the latter being rotatably mounted on the fastening part (14) by way of an axial bearing (18, 28) having a threaded portion (24) pointing upwards, and both the fastening part (14) and the spring body (10) are provided with through-openings (16, 32, 34) so that a head (28) of the fastening screw (26) is accessible from the bottom end of the vibration absorber.

2. Vibration absorber according to claim 1, characterised in that the diameter of the through-opening (16) provided in the fastening part (14) is smaller than the diameter of the head (28) of the fastening screw (26).

3. Vibration absorber according to claim 1 or 2, characterised in that the axial bearing comprises a supporting sleeve (18) which is displaceable in the fastening part (14) by a screw-thread and which cooperates with the head (28) of the fastening screw (26).

4. Vibration absorber according to claim 3, characterised in that an inner bore (48) of the supporting sleeve (18) cooperates with a bearing portion (50) of the fastening screw (26) with sliding clearance.

5. Vibration absorber according to claim 3 or 4, characterised in that a spring washer (30) is arranged between the lower end face of the supporting sleeve (18) and the head (28) of the fastening screw (26).

6. Vibration absorber according to any one of claims 3 to 5, characterised in that the supporting sleeve (18) has a flange (20) which overlaps the fastening part (14).

7. Vibration absorber according to claim 6, characterised in that the flange (20) is provided at its end face with form-fitting means (22) for applying a tool.

8. Vibration absorber according to any one of claims 1 to 7, characterised in that a lower base plate (36) is provided with a through-opening (38) so that a head (28) of the fastening screw (26) is accessible from the bottom end of the vibration absorber.

9. Process for the manufacture of a vibration absorber according to any one of claims 4 to 8, in which the fastening part (14) is embedded in and vulcanised to a rubber composition forming the spring body (10), characterized in that the cup-shaped fastening part (14) which is open towards the top is sealed during moulding of the spring body (10) and during vulcanisation thereof by a stopper which substitutes the supporting sleeve (18).

## Revendications

1. Amortisseur de vibrations comprenant un corps à ressort déformable (10) qui peut être placé avec son extrémité inférieure sur une surface d'appui (42) et qui porte avec son extrémité supérieure une unité de fixation (12) pouvant être reliée à une charge (44) par un raccord vissé, caractérisé en ce que l'unité de fixation (12) présente une pièce de fixation (14) reliée au corps à ressort (10) et une vis de fixation (26), cette dernière étant montée de façon rotative sur la pièce de fixation (14) par le biais d'un palier axial (18, 28) présentant une partie filetée (24) pointant vers le haut, et en ce qu'à la fois la pièce de fixation (14) et le corps à ressort (10) sont munis d'orifices de passage (16, 32, 34), de sorte qu'une tête (28) de la vis de fixation (26) est accessible par l'extrémité inférieure de l'amortisseur de vibrations.

2. Amortisseur de vibrations selon la revendication 1, caractérisé en ce que le diamètre de l'orifice de passage (16) prévu dans la pièce de fixation (14) est inférieur au diamètre de la tête (28) de la vis de fixation (26).

3. Amortisseur de vibrations selon la revendication 1 ou 2, caractérisé en ce que le palier de butée présente une douille d'appui (18) pouvant être déplacée dans la pièce de fixation (14) par un filetage, qui coopère avec la tête (28) de la vis de fixation (26).

4. Amortisseur de vibrations selon la revendication 3, caractérisé en ce qu'un perçage interne (48) de la douille d'appui (18) coopère avec un jeu coulissant avec une partie d'appui (50) de la vis de fixation (26).

5. Amortisseur de vibrations selon la revendication 3 ou 4, caractérisé en ce qu'entre la surface frontale inférieure de la douille d'appui (18) et la tête (28) de la vis de fixation (26) est placée une rondelle-ressort (30).

6. Amortisseur de vibrations selon l'une des revendications 3 à 5, caractérisé en ce que la douille d'appui (18) présente une bride (20) s'enclenchant sur la pièce de fixation (14).

7. Amortisseur de vibrations selon la revendication 6, caractérisé en ce que la bride (20) est munie sur sa surface d'extrémité de moyens pour créer un engagement positif (22) qui sont destinés à fixer un outil.

8. Amortisseur de vibrations selon l'une des revendications 1 à 7, caractérisé en ce qu'une plaque de base inférieure (36) est munie d'un orifice de passage (38), de sorte qu'une tête (28) de la vis de fixation (26) est accessible par l'extrémité inférieure de l'amortisseur de vibrations.

9. Procédé pour fabriquer un amortisseur de vibrations selon l'une des revendications 4 à 8, selon lequel la pièce de fixation (14) est enfoncée dans une masse de caoutchouc formant le corps à ressort (10) et est vulcanisée sur cette dernière, caractérisé en ce que la pièce de fixation (14) en forme de gobelet et ouverte vers le haut est fermée par un bouchon remplaçant la douille d'appui (18) lors du formage et de la vulcanisation du corps à ressort (10).
